# NEUE EUROPÄISCHE PATENTSCHRIFT

(11) **EP 1 079 588 B2**
(45) Veröffentlichungstag und Bekanntmachung des Hinweises auf die Entscheidung über den Einspruch: **05.12.2012**
(45) Hinweis auf die Patenterteilung: 13.09.2006
(21) Anmeldenummer: 00117141.2
(22) Anmeldetag: 10.08.2000
(51) Int. Cl.: H04M 3/48, H04M 1/675

(54) **Verfahren zur Durchführung eines automatischen Rückrufs**
Method for automatic callback
Procédé pour rappel automatique

(30) Priorität: 26.08.1999 DE 19940513
(43) Veröffentlichungstag der Anmeldung: 28.02.2001
(73) Patentinhaber: ROBERT BOSCH GMBH, 70442 Stuttgart (DE)
(72) Erfinder: Faye, Ian, 70192 Stuttgart (DE)

(56) Entgegenhaltungen:
- EP-A- 0 558 326
- EP-A- 0 654 931
- EP-A- 0 689 333
- JP-A- 6 343 109
- US-A- 5 901 211

## Beschreibung

### Stand der Technik

Die Erfindung geht von einem Verfahren zur Durchführung eines automatischen Rückrufs nach der Gattung des unabhängigen Anspruchs aus.

Es ist bereits bekannt, einen automatischen Rückruf von einem ersten Telekommunikationsendgerät zu einem zweiten Telekommunikationsendgerät für den Fall vorzusehen, daß bei einem zuvor eingeleiteten Verbindungsaufbau vom ersten Telekommunikationsendgerät zum zweiten Telekommunikationsendgerät ein Belegtzustand des zweiten Telekommunikationsendgerätes vorlag, so daß kein erfolgreicher-Verbindungsaufbau zustande kam.

### Vorteile der Erfindung

Das erfindungsgemäße Verfahren mit den Merkmalen des unabhängigen Anspruchs hat demgegenüber den Vorteil, daß der automatische Rückruf frühestens dann eingeleitet wird, wenn vom zweiten Telekommunikationsendgerät eine Anwesenheit des gewünschten Zielteilnehmers detektiert wird. Auf diese Weise kann ein automatischer Rückruf auch für den Fall vorgesehen werden, daß ein vorheriger Verbindungsaufbau deshalb nicht zustande kam und erfolglos war, weil der am zweiten Telekommunikationsendgerät eingehende Ruf nicht entgegengenommen wurde, ohne belegt zu sein, da der Benutzer des zweiten Telekommunikationsendgerätes nicht anwesend war.

Durch die in den Unteransprüchen aufgeführten Maßnahmen sind vorteilhafte Weiterbildungen und Verbesserungen des Verfahrens gemäß den unabhängigen Anspruch möglich.

Besonders vorteilhaft ist es, daß die Anwesenheit des gewünschten Zielteilnehmers durch Detektion einer Eingabe an einer Eingabeeinheit, insbesondere einer Tastatur, des zweiten Telekommunikationsendgerätes festgestellt wird. Auf diese Weise ist eine einfache und kein Identifikationsmodul erfordernde Möglichkeit zur Freigabe eines automatischen Rückrufs gegeben, wenn der gewünschte Zielteilnehmer eine entsprechende Eingabe an der Eingabeeinheit vornimmt, beispielsweise die Eingabe einer Geheimnummer mittels Zehnertastatur.

Besonders vorteilhaft ist es, daß das Identifikationsmodul mittels einer dem zweiten Telekommunikationsendgerät zugeordneten Lesevorrichtung detektiert wird. Auf diese Weise kann der Benutzer des zweiten Telekommunikationsendgerätes selbst bestimmen, wann er für einen automatischen Rückruf als anwesend gelten will, da er dazu das Identifikationsmodul in die Lesevorrichtung einführen muß. Eine Eingabe an einer Eingabeeinheit ist dazu nicht erforderlich.

Ein weiterer Vorteil ergibt sich dadurch, daß das Identifikationsmodul berührungslos, vorzugsweise über Funk, vom zweiten Telekommunikationsendgerät in einer Umgebung des zweiten Telekommunikationsendgerätes detektiert wird. Auf diese Weise kann ein automatischer Rückruf zum frühestmöglichen Zeitpunkt eingeleitet werden, nämlich sobald sich der Benutzer des zweiten Telekommunikationsendgerätes in der Umgebung des zweiten Telekommunikationsendgerätes befindet, so daß er den eingehenden Ruf wahrnehmen und entgegennehmen kann. Außerdem wird der Komfort für den Benutzer des zweiten Telekommunikationsendgerätes erhöht, da seine Anwesenheit in der Nähe des zweiten Telekommunikationsendgerätes automatisch vom zweiten Telekommunikationsendgerät detektiert wird.

### Zeichnung

Ausführungsbeispiele der Erfindung sind in der Zeichnung dargestellt und in der nachfolgenden Beschreibung näher erläutert. Es zeigen Figur 1 ein Blockschaltbild einer ersten Ausführungsform der Erfindung, Figur 2 ein Blockschaltbild einer zweiten Ausführungsform der Erfindung, Figur 3 einen Ablaufplan für die Funktionsweise einer Auswerteeinheit eines zweiten Telekommunikationsendgerätes und Figur 4 einen Ablaufplan für die Funktionsweise einer Auswerteeinheit eines ersten Telekommunikationsendgerätes.

### Beschreibung der Ausführungsbeispiele

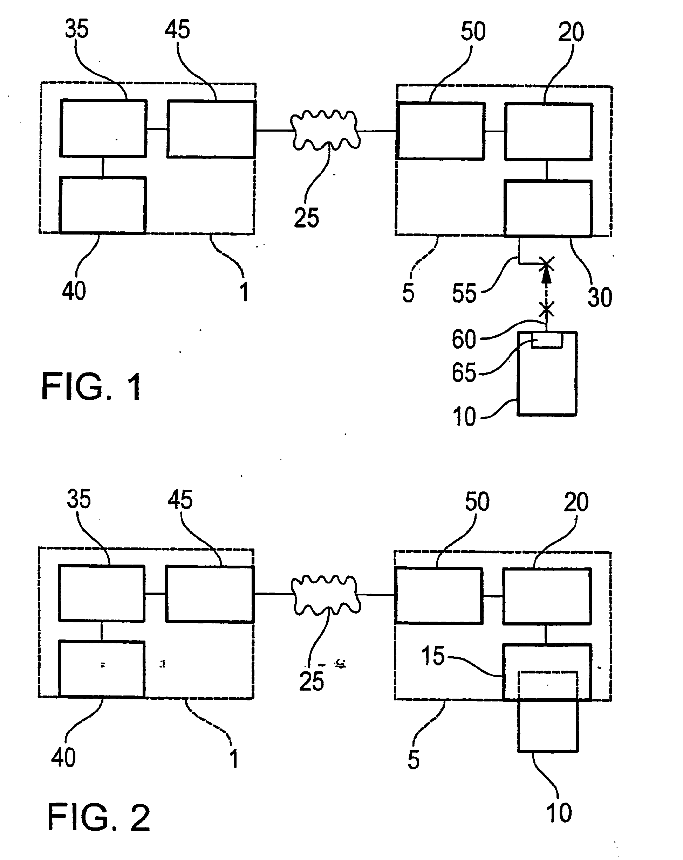

In Figur 1 kennzeichnet 1 ein erstes Telekommunikationsendgerät, das eine erste Auswerteeinheit 35 umfaßt, an die eine Eingabeeinheit 40 und eine erste Netzanschlußeinheit 45 angeschlossen ist. Weiterhin kennzeichnet 5 ein zweites Telekommunikationsendgerät, das eine zweite Auswerteeinheit 20 aufweist, die mit einer zweiten Netzanschlußeinheit 50 und mit einer Empfangsvorrichtung 30 verbunden ist. Über ein Telekommunikationsnetz 25 ist die erste Netzanschlußeinheit 45 mit der zweiten Netzanschlußeinheit 50 verbunden. Gemäß Figur 1 ist die Verbindung zwischen der ersten Netzanschlußeinheit 45 und der zweiten Netzanschlußeinheit 50 über das Telekommunikationsnetz 25 drahtgebunden dargestellt. Es ist jedoch auch möglich, das Telekommunikationsnetz 25 drahtlos vorzusehen, beispielsweise als Mobilfunknetz, um eine drahtlose Verbindung zwischen der ersten Netzanschlußeinheit 45 und der zweiten Netzanschlußeinheit 50 zu realisieren. Die Empfangsvorrichtung 30 weist eine erste Antenne 55 auf. In Figur 1 kennzeichnet 10 ein Identifikationsmodul, das eine zweite Antenne 60 aufweist. Das Identifikationsmodul 10 kann dabei als Zugangsberechtigungskarte, beispielsweise in Form einer Chipkarte, ausgebildet sein. Das Identifikationsmodul 10 umfaßt gemäß Figur 1 einen Sender 65, an den die zweite Antenne 60 angeschlossen ist. Der Sender 65 sendet dabei in regelmäßigen Zeitabständen über die zweite Antenne 60 Signale mit schwacher Leistung ab, die beispielsweise in einem Umkreis von wenigen Metern empfangen werden können. Die Reichweite des Senders 65 kann beispielsweise 8 Meter betragen. Werden von der Empfangsvorrichtung 30 über die erste Antenne 55 Signale vom Sender 65 empfangen, so detektiert die zweite Auswerteeinheit 20 das Identifikationsmodul 10 und damit die Anwesenheit eines für das zweite Telekommunikationsendgerät 5 zugangsberechtigten Benutzers.

Auf diese Weise wird eine berührungslose beziehungsweise drahtlose Detektion des Identifikationsmoduls 10 durch das zweite Telekommunikationsendgerät 5 in einer Umgebung des zweiten Telekommunikationsendgerätes 5 bewirkt. Eine solche berührungslose Detektion des Identifikationsmoduls 10 kann jedoch zusätzlich oder alternativ auch optisch erfolgen. Dazu muß der Sender 65 einen Fotoemitter und die Empfangsvorrichtung 30 einen Fotodetektor umfassen. Der Fotoemitter kann dann in regelmäßigen Zeitabständen optische Signale, beispielsweise im Infrarotbereich, mit geringer Leistung absenden, die in einer Umgebung von wenigen Metern, beispielsweise von 10 Metern empfangen werden können. Empfängt der Fotodetektor der Empfangsvorrichtung 30 die optischen Signale des Identifikationsmoduls 10, so detektiert die zweite Auswerteeinheit 20 in der beschriebenen Weise die Anwesenheit eines zugangsberechtigten Benutzers. Die Zugangsberechtigung in den beschriebenen Fällen der drahtlosen Detektion des Identifikationsmoduls 10 wird in der zweiten Auswerteeinheit 20 natürlich nur dann festgestellt, wenn die vom Identifikationsmodul 10 abgesandten Signale auch Informationen umfassen, die die Zugangsberechtigung für das Identifikationsmodul 10 beziehungsweise dessen Inhaber nachweisen.

Das selbe gilt für eine weitere Ausführungsform nach Figur 2, in der gleiche Bezugszeichen gleiche Elemente kennzeichnen. Im Unterschied zu Figur 1 findet dabei keine berührungslose Detektion des Identifikationsmoduls 10 statt. Vielmehr ist gemäß Figur 2 anstelle der Empfangsvorrichtung 30 eine Lesevorrichtung 15 vorgesehen, in die das Identifikationsmodul 10 eingeführt werden kann, wie in Figur 2 dargestellt. Die Empfangsvorrichtung 30 gemäß Figur 1 beziehungsweise die Lesevorrichtung 15 gemäß Figur 2 können im zweiten Telekommunikationsendgerät 5 selbst angeordnet sein. Sie können jedoch auch vom zweiten Telekommunikationsendgerät 5 abgesetzt und mit diesem drahtlos oder drahtgebunden verbunden sein, so daß eine Zuordnung zwischen der Empfangsvorrichtung 30 beziehungsweise der Lesevorrichtung 15 und dem zweiten Telekommunikationsendgerät 5 besteht.

Es kann auch vorgesehen sein, daß das zweite Telekommunikationsendgerät 5 sowohl die Empfangsvorrichtung 30 als auch die Lesevorrichtung 15 umfaßt, beziehungsweise daß sowohl die Empfangsvorrichtung 30 als auch die Lesevorrichtung 15 dem zweiten Telekommunikationsendgerät 5 zugeordnet sind. Die Anwesenheit eines zugangsberechtigten Benutzers läßt sich dann wahlweise berührungslos oder mittels Lesevorrichtung 15 realisieren.

Die Anwesenheit eines zugangsberechtigten Benutzers als gewünschter Zielteilnehmer am zweiten Telekommunikationsendgerät 5 kann auch dadurch festgestellt werden, indem dieser Benutzer eine Eingabe an einer in Figur 1 und in Figur 2 nicht dargestellten und mit der zweiten Auswerteeinheit 20 verbundenen Eingabeeinheit des zweiten Telekommunikationsendgerätes 5 tätigt. Diese Eingabeeinheit kann als Tastatur, beispielsweise als Zehnertastatur, oder als Spracheingabeeinheit ausgebildet sein. Der Benutzer meldet durch entsprechende Eingabe seine Anwesenheit der zweiten Auswerteeinheit 20. Bei dieser Eingabe kann es sich um eine Identifikationsnummer, beispielsweise eine Geheimnummer, handeln, die den Benutzer als zugangsberechtigt kennzeichnet. Bei Ausbildung der Eingabeeinheit als Tastatur kann es sich bei der erforderlichen Eingabe auch lediglich um die Betätigung einer Taste handeln. Auch kann am zweiten Telekommunikationsendgerät 5 ein optischer Sensor, beispielsweise ein Infrarotsensor angeordnet sein, der einen anwesenden Benutzer aufgrund von Wärmestrahlung detektiert. In den beiden letztgenannten Fällen der Betätigung einer Taste und der Detektion von Wärmestrahlung ist keine Differenzierung zwischen verschiedenen Benutzern möglich, so daß jeder Benutzer als zugangsberechtigt erkannt wird.

Die Lesevorrichtung 15 gemäß Figur 2 kann ein Kartenleser für ein kartenförmiges Identifikationsmodul 10 sein. Das Auslesen von Informationen des Identifikationsmoduls 10 kann dabei optisch, magnetisch oder elektronisch erfolgen. Entsprechend kann das Identifikationsmodul 10 einen Barcode, einen Magnetstreifen oder einen elektronischen Speicherchip umfassen. Es ist jedoch auch denkbar, die Lesevorrichtung 15 als Abspielgerät für ein als optische, als optomagnetische oder als magnetische Speicherplatte ausgebildetes Identifikationsmodul 10 auszubilden.

Wenn gemäß Figur 2 ein gültiges Identifikationsmodul 10 in die Lesevorrichtung 15 eingeführt wurde, so wird die Anwesenheit eines zugangsberechtigten Benutzers von der zweiten Auswerteeinheit 20 detektiert, vorausgesetzt die vom in die Lesevorrichtung 15 eingeführten Identifikationsmodul 10 gelesenen Daten enthalten den Nachweis für eine Zugangsberechtigung zum zweiten Telekommunikationsendgerät 5.

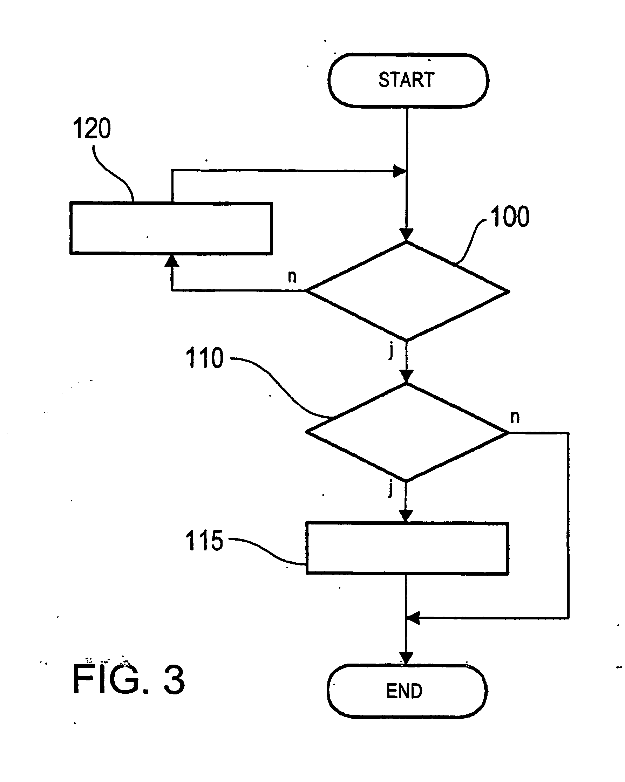

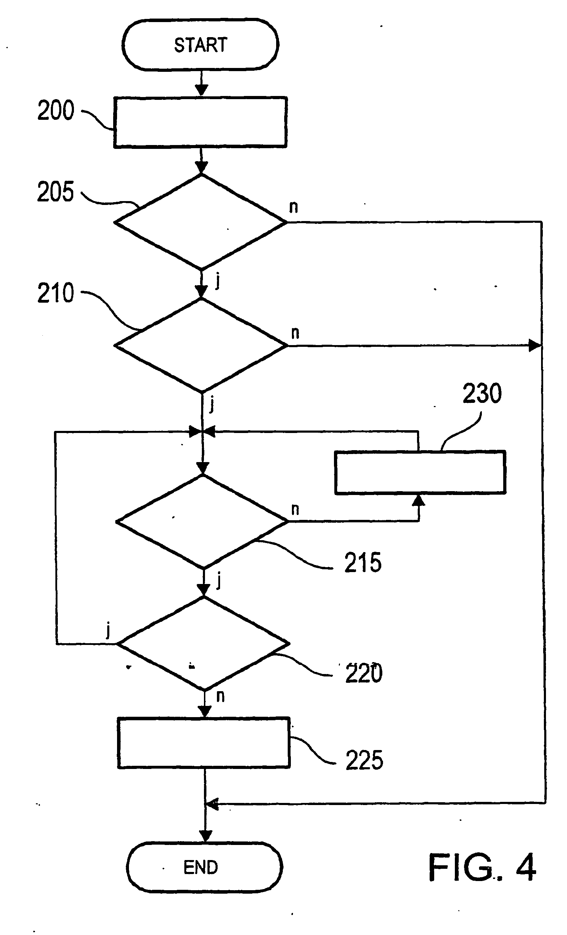

Anhand des Ablaufplanes nach Figur 3 für die Funktionsweise der zweiten Auswerteeinheit 20 und des Ablaufplanes nach Figur 4 für die Funktionsweise der ersten Auswerteeinheit 35 wird im folgenden das erfindungsgemäße Verfahren zur Durchführung eines automatischen Rückrufs vom ersten Telekommunikationsendgerät 1 zum zweiten Telekommunikationsendgerät 5 beschrieben.

Dabei wird zunächst vom ersten Telekommunikationsendgerät 1 ein Verbindungsaufbau über das Telekommunikationsnetz 25 zum zweiten Telekommunikationsendgerät 5 eingeleitet. Wird der beim zweiten Telekommunikationsendgerät 5 entsprechend eingehende Ruf nicht entgegengenommen, bevor der Verbindungsaufbau am ersten Telekommunikationsendgerät 1 wieder abgebrochen wird, so kann der Benutzer des ersten Telekommunikationsendgerätes 1 über die Eingabeeinheit 40 einen automatischen Rückruf veranlassen. Der automatische Rückruf vom ersten Telekommunikationsendgerät 1 zum zweiten Telekommunikationsendgerät 5 wird dann eingeleitet, wenn die Anwesenheit des Benutzers des zweiten Telekommunikationsendgerätes 5 mittels des Identifikationsmoduls 10 in der beschriebenen Weise von der zweiten Auswerteeinheit 20 ermittelt wurde und wenn zumindest das erste Telekommunikationsendgerät 1 nicht belegt ist.

Wenn das zweite Telekommunikationsendgerät 5 mittels der zweiten Auswerteeinheit 20 die Anwesenheit eines zugangsberechtigten Benutzers detektiert hat, sendet es über die zweite Netzanschlußeinheit 50 eine entsprechende Mitteilung an das Telekommunikationsnetz 25, daß ein automatischer Rückruf möglich ist. Diese Mitteilung kann dabei in regelmäßigen Zeitabständen vom zweiten Telekommunikationsendgerät 5 an das Telekommunikationsnetz 25 abgegeben werden, so lange das Identifikationsmodul 10 des zugangsberechtigten Benutzers von der zweiten Auswerteeinheit 20 detektiert wird. Über diese Mitteilung beziehungsweise diese Mitteilungen wird das erste Telekommunikationsendgerät 1 vom Telekommunikationsnetz 25 über die erste Netzanschlußeinheit 45 informiert. Ist es selbst nicht belegt, so kann es den automatischen Rückruf einleiten, wenn der Empfang einer Information über eine entsprechende Mitteilung des zweiten Telekommunikationsendgerätes 5 nicht länger als eine vorgegebene Zeit zurückliegt.

Gemäß Figur 4 wird nun die Funktionsweise der ersten Auswerteeinheit 35 beschrieben. Bei einem Programmpunkt 200 veranlaßt die erste Auswerteeinheit 35 ausgehend von einer Eingabe an der Eingabeeinheit 40 einen Verbindungsaufbau vom ersten Telekommunikationsendgerät 1 über das Telekommunikationsnetz 25 zum zweiten Telekommunikationsendgerät 5. Anschließend wird zu einem Programmpunkt 205 verzweigt. Bei Programmpunkt 205 prüft die erste Auswerteeinheit 35, ob der Verbindungsaufbau nicht erfolgreich war, das heißt ob der am zweiten Telekommunikationsendgerät 5 eingehende Ruf nicht entgegengenommen wurde, bevor der Verbindungsaufbau am ersten Telekommunikationsendgerät 1 abgebrochen wurde. Ist dies der Fall, so wird zu einem Programmpunkt 210 verzweigt, andernfalls wird das Programm verlassen. Bei Programmpunkt 210 prüft die erste Auswerteeinheit 35, ob an der Eingabeeinheit 40 ein automatischer Rückruf veranlaßt wurde. Ist dies der Fall, so wird zu einem Programmpunkt 215 verzweigt, andernfalls wird das Programm verlassen. Bei Programmpunkt 215 prüft die erste Auswerteeinheit 35, ob vom Telekommunikationsnetz 25 eine Information über eine Mitteilung des zweiten Telekommunikationsendgerätes 5 empfangen wurde, wonach ein zugangsberechtigter Benutzer des zweiten Telekommunikationsendgerätes 5 beim zweiten Telekommunikationsendgerät 5 anwesend ist. Ist dies der Fall und liegt der Empfang einer solchen Information nicht länger als die vorgegebene Zeit zurück, so wird zu einem Programmpunkt 220 verzweigt, andernfalls wird zu einem Programmpunkt 230 verzweigt. Bei Programmpunkt 230 durchläuft die erste Auswerteeinheit 35 eine Warteschleife. Anschließend wird zu Programmpunkt 215 zurückverzweigt. Bei Programmpunkt 220 prüft die erste Auswerteeinheit 35, ob das erste Telekommunikationsendgerät 1 gerade belegt ist. Ist dies der Fall, so wird zu Programmpunkt 215 zurückverzweigt, andernfalls wird zu einem Programmpunkt 225 verzweigt. Bei Programmpunkt 225 veranlaßt die erste Auswerteeinheit 35 die Einleitung des automatischen Rückrufs vom ersten Telekommunikationsendgerät 1 zum zweiten Telekommunikationsendgerät 5 über das Telekommunikationsnetz 25. Anschließend wird das Programm verlassen.

Gemäß Figur 3 wird die Funktionsweise der zweiten Auswerteeinheit 20 beschrieben.

Bei einem Programmpunkt 100 prüft die zweite Auswerteeinheit 20, ob das Identifikationsmodul 10 eines zugangsberechtigten Benutzers in einer oder mehreren der beschriebenen Weisen detektiert wurde. Ist dies der Fall, so wird zu einem Programmpunkt 110 verzweigt, andernfalls wird zu einem Programmpunkt 120 verzweigt. Bei Programmpunkt 120 wird eine Warteschleife durchlaufen, deren Wartezeit in vorteilhafter Weise der vorgegebenen Zeit entsprechen kann. Anschließend wird zu Programmpunkt 100 zurückverzweigt. Bei Programmpunkt 110 prüft die zweite Auswerteeinheit 20, ob der Benutzer des zweiten Telekommunikationsendgerätes 5 beispielsweise über eine in Figur 1 und Figur 2 nicht dargestellte Eingabeeinheit des zweiten Telekommunikationsendgerätes 5 die Möglichkeit eines automatischen Rückrufs überhaupt zugelassen hat. Ist dies der Fall, so wird zu einem Programmpunkt 115 verzweigt, andernfalls wird das Programm verlassen. Bei Programmpunkt 115 veranlaßt die zweite Auswerteeinheit 20 das Absenden der Mitteilung über die zweite Netzanschlußeinheit 50 an das Telekommunikationsnetz 25, wonach ein automatischer Rückruf möglich ist. Anschließend wird das Programm verlassen. Das Programm beziehungsweise der Ablaufplan gemäß Figur 3 kann von der zweiten Auswerteeinheit 20 in regelmäßigen Zeitabständen durchlaufen werden, damit eine ständige Aktualisierung über die Möglichkeit eines automatischen Rückrufs dem Telekommunikationsnetz 25 beziehungsweise dem ersten Telekommunikationsendgerät 1 bekannt gemacht werden kann. In vorteilhafter Weise wird dabei der Zeitabstand zwischen aufeinanderfolgenden Durchläufen des Ablaufplans gemäß Figur 3 gleich der vorgegebenen Zeit gewählt. Auf diese Weise wird von der ersten Auswerteeinheit 35 ein automatischer Rückruf vom ersten Telekommunikationsendgerät 1 zum zweiten Telekommunikationsendgerät 5 nur dann eingeleitet, wenn die vom zweiten Telekommunikationsendgerät 5 erzeugte Mitteilung, daß ein automatischer Rückruf möglich ist, aktuell ist, das heißt, wenn der letztmalige Empfang einer Information über eine solche Mitteilung im ersten Telekommunikationsendgerät 1 nicht länger als die vorgegebene Zeit zurückliegt.

Der automatische Rückruf wird frühestens dann eingeleitet, wenn vom zweiten Telekommunikationsendgerät 5 ein dem zweiten Telekommunikationsendgerät 5 zugeordnetes Identifikationsmodul detektiert wird.

Der automatische Rückruf kann beispielsweise wie folgt eingeleitet werden: Zunächst erfolgt eine akustische und/oder optische Signalisierung am ersten Telekommunikationsendgerät 1. Wird anschließend ein Gabelkontakt des ersten Telekommunikationsendgerätes 1 beispielsweise durch Abheben eines Handapparates oder Betätigen einer Hörertaste betätigt, so erfolgt ein Verbindungsaufbau vom ersten Telekommunikationsendgerät 1 zum zweiten Telekommunikationsendgerät 5. Falls das zweite Telekommunikationsendgerät 5 inzwischen nicht belegt wurde, erfolgt auch eine akustische und/oder optische Signalisierung am zweiten Telekommunikationsendgerät 5.

Ist das zweite Telekommunikationsendgerät 5 beim automatischen Rückruf belegt, so kann, beispielsweise gemäß dem Leistungsmerkmal "Anklopfen", ebenfalls eine akustische und/oder optische Signalisierung am zweiten Telekommunikationsendgerät 5 erfolgen, die dem Benutzer am zweiten Telekommunikationsendgerät 5 einen "anklopfenden" rufenden Teilnehmer signalisiert. Der Benutzer des zweiten Telekommunikationsendgerätes 5 kann dann in bekannter Weise entscheiden, ob er den Ruf des "anklopfenden" Teilnehmers entgegennehmen will. Es kann jedoch auch vorgesehen sein, daß bei belegtem zweitem Telekommunikationsendgerät 5 kein automatischer Rückruf zum zweiten Telekommunikationsendgerät 5 eingeleitet wird. Ein automatischer Rückruf zum zweiten Telekommunikationsendgerät 5 wird dann nur in dem Fall eingeleitet, daß sowohl ein zugangsberechtigter Benutzer am zweiten Telekommunikationsendgerät 5 detektiert wurde und das zweite Telekommunikationsendgerät 5 nicht belegt ist. Dabei kann vorgesehen sein, den Programmpunkt 115 im Ablaufplan nach Figur 3 in diesem Fall zu überspringen und keine Mitteilung über die Möglichkeit eines automatischen Rückrufs an das Telekommunikationsnetz 25 abzusenden.

Eine Telekommunikationsverbindung über das Telekommunikationsnetz 25 kommt beim automatischen Rückruf beispielsweise durch Abheben eines Handapparates am zweiten Telekommunikationsendgerät 5, beim "Anklopfen" durch Betätigen einer entsprechenden Taste an einer Eingabeeinheit des zweiten Telekommunikationsendgerätes 5 zustande. Für den Fall, daß am zweiten Telekommunikationsendgerät 5 in der beschrieben Weise die Möglichkeit der Entgegennahme eines automatischen Rückrufs verhindert wurde, wird vom zweiten Telekommunikationsendgerät 5 eine entsprechende Mitteilung an Telekommunikationsnetz 25 abgegeben. Das erste Telekommunikationsendgerät 1 wird dann vom Telekommunikationsnetz 25 über diese Mitteilung informiert, wodurch am ersten Telekommunikationsendgerät 1 die Einleitung des entsprechenden automatischen Rückrufs verhindert werden kann, so daß es nicht zu der beschriebenen akustischen und/oder optischen Signalisierung am ersten Telekommunikationsendgerät 1 kommt.

Das erste Telekommunikationsendgerät 1 und das zweite Telekommunikationsendgerät 5 können schnurgebunden oder schnurlos oder als Mobilfunkgerät oder dergleichen ausgebildet sein. Das Identifikationsmodul 10 kann auch gleichzeitig für die Zugangsberechtigung zu einem Fahrzeug oder einem Sicherheitssystem oder einer beliebigen Einrichtung verwendet werden und als sogenannte "Smart-Card" ausgebildet sein.

Durch das erfindungsgemäße Verfahren wird bewirkt, daß ein automatischer Rückruf eingeleitet wird, sobald sich der Zielteilnehmer, das heißt der Benutzer des zweiten Telekommunikationsendgerätes 5 in der Nähe des zweiten Telekommunikationsendgerätes 5 befindet, so daß dieser Benutzer einen am zweiten Telekommunikationsendgerät 5 eingehenden Ruf wahrnehmen und entgegennehmen kann.

Der automatische Rückruf kann vom ersten Telekommunikationsendgerät 1 mittels Rufumleitung auch zu einem vom zweiten Telekommunikationsendgerät 5 verschiedenen dritten Telekommunikationsendgerät eingeleitet werden, wenn das dritte Telekommunikationsendgerät das Identifikationsmodul 10 detektiert und die Zugangsberechtigung des Benutzers feststellt, wodurch der automatische Rückruf vom zweiten Telekommunikationsendgerät 5 zum dritten Telekommunikationsendgerät umgeleitet wird, auch wenn der dem automatischen Rückruf vorausgehende erfolglose Verbindungsaufbau noch für die gewünschte Verbindung zwischen dem ersten Telekommunikationsendgerät 1 und dem zweiten Telekommunikationsendgerät 5 festgestellt wurde, ohne daß zu diesem Zeitpunkt bereits eine Rufumleitung zum dritten Telekommunikationsendgerät bestand.

Auf diese Weise kann der automatische Rückruf möglichst frühzeitig eingeleitet werden, da der zu rufende Teilnehmer an mehreren Telekommunikationsendgeräten erreichbar ist. Die Rufumleitung kann vom Benutzer selbst beispielsweise an der Eingabeeinheit des zweiten Telekommunikationsendgerätes 5 oder des dritten Telekommunikationsendgerätes oder an einer Eingabeeinheit eines beliebigen über das Telekommunikationsnetz 25 erreichbaren Telekommunikationsendgerätes programmiert werden. Es kann jedoch auch vorgesehen sein, die Rufumleitung vom zweiten Telekommunikationsendgerät 5 zum dritten Telekommunikationsendgerät durch die Feststellung der Zugangsberechtigung des Benutzers mittels Detektion des Identifikationsmoduls 10 am dritten Telekommunikationsendgerät selbst zu veranlassen, vorausgesetzt die ursprüngliche Zuordnung des Benutzers zum zweiten Telekommunikationsendgerät 5 ist im Telekommunikationsnetz 25 bekannt und das dritte Telekommunikationsendgerät gibt in der gemäß Figur 3 beschriebenen Weise eine Mitteilung an das Telekommunikationsnetz 25 über die Erreichbarkeit des Benutzers am dritten Telekommunikationsendgerät. Das Telekommunikationsnetz 25 leitet dann einen vom ersten Telekommunikationsendgerät 1 zum zweiten Telekommunikationsendgerät 5 eingeleiteten automatischen Rückruf an das dritte Telekommunikationsendgerät um.

In diesem Fall spielt das dritte Telekommunikationsendgerät die Rolle des zweiten Telekommunikationsendgerätes.

Wird ein automatischer Rückruf von verschiedenen Teilnehmern zum zweiten Telekommunikationsendgerät 5 eingeleitet, sobald die Anwesenheit des zugangsberechtigten Benutzers am zweiten Telekommunikationsendgerät 5 detektiert wird, so können die entsprechenden beim zweiten Telekommunikationsendgerät 5 eingehenden Rufe in einer Anrufliste für eine sequentielle Abarbeitung gespeichert werden. Dabei können einzelnen rufenden Teilnehmern Prioritäten eingeräumt werden, so daß deren automatischer Rückruf bevorzugt, also früher abgearbeitet wird, als automatische Rückrufe von nicht bevorzugten Teilnehmern.

## Patentansprüche

1. Verfahren zur Durchführung eines automatischen Rückrufs von einem ersten Telekommunikationsendgerät (1) zu einem zweiten Telekommunikationsendgerät (5) nach einem erfolglosen Verbindungsaufbau vom ersten Telekommunikationsendgerät (1) zu einem gewünschten Zielteilnehmer, wobei über ein Telekommunikationsnetz (25) eine erste Netzanschluss einheit (45) des ersten Telekommunikationsendgerätes (1) mit einer zweiter Netzanschluss einheit (50) des zweiten Telekommunikationsendgerätes (5) verbunden ist, wobei der automatische Rückruf frühestens dann eingeleitet wird, wenn vom zweiten Telekommunikationsendgerät (5) eine Anwesenheit des gewünschten Zielteilnehmers detektiert wird, **dadurch gekennzeichnet, dass** wenn das zweite Telekommunikationsendgerät (5) mittels einer zweiten Auswerteeinheit (20) die Anwesenheit eines zugangsberechtigten Benutzers als gewünschten Zielteilnehmer detektiert hat, es über die zweite Netzanschlusseinheit (50) eine entsprechende Mitteilung an das Telekommunikationsnetz (25) sendet, dass ein automatischer Rückruf möglich ist, wobei diese Mitteilung in regelmäßigen Zeitabständen vom zweiten Telekommunikationsendgerät (5) an das Telekommunikationsnetz (25) abgegeben wird, so lange ein ldentifikationsmodul (10) des zugangsberechtigten Benutzers von der zweiten Auswerteeinheit (20) detektiert wird, wobei eine erste Auswerteeinheit (35) des ersten Telekommunikationsendgerätes (1) überprüft, ob vom Telekommunikationsnetz (25) eine Information über eine Mitteilung des zweiten Telekommunikationsendgeräts (5) empfangen wurde, wonach ein zugangsberechtigter Benutzer des zweiten Telekommunikationsendgeräts (5) beim zweiten Telekommunikationsendgerät (5) anwesend ist und der Empfang dieser Information nicht länger als eine vorgegebene Zeit zurückliegt, ein automatischer Rückruf eingeleitet wird, wobei die regelmäßigen Zeitabstände gleich der vorgegebenen Zeit gewählt werden.

2. Verfahren nach Anspruch 1, **dadurch gekennzeichnet, daß** die Anwesenheit des gewünschten Zielteilnehmers durch Detektion einer Eingabe an einer Eingabeeinheit, insbesondere einer Tastatur, des zweiten Telekommunikationsendgerätes (5) festgestellt wird.

3. Verfahren nach Anspruch 1 oder 2, **dadurch gekennzeichnet, daß** das Identifikationsmodul (10) mittels einer dem zweiten Telekommunikationsendgerät (5) zugeordneten Lesevorrichtung (15) detektiert wird.

4. Verfahren nach einen der Ansprüche 1-3, **dadurch gekennzeichnet, daß** das Identifikationsmodul (10) berührungslos, vorzugsweise über Funk, vom zweiten Telekommunikationsendgerät (5) in einer Umgebung des zweiten Telekommunikationsendgerätes (5) detektiert wird.

5. Verfahren nach einem der vorherigen Ansprüche, **dadurch gekennzeichnet, daß** der automatische Rückruf eingeleitet wird, wenn festgestellt wird, daß zumindest das erste Telekommunikationsendgerät (1) nicht belegt ist.

6. Verfahren nach Anspruch 5, **dadurch gekennzeichnet, daß** der automatische Rückruf eingeleitet wird, wenn festgestellt wird, daß weder das erste Telekommunikationsendgerät (1) noch das zweite Telekommunikationsendgerät (5) belegt ist.

7. Verfahren nach einem der vorherigen Ansprüche, **dadurch gekennzeichnet, daß** der automatische Rückruf vom ersten Telekommunikationsendgerät (1) zum zweiten Telekommunikationsendgerät (5) mittels Rufumleitung eingeleitet wird.

## Claims

1. Method for automatic callback from a first telecommunication terminal (1) to a second telecommunication terminal (5) following an unsuccessful call set-up from the first telecommunication terminal (1) to a required destination subscriber, a first network connection unit (45) of the first telecommunication terminal (1) being connected to a second network connection unit (50) of the second telecommunication terminal (5) via a telecommunication network (25), the automatic callback being initiated at the earliest when a presence of the required destination subscriber is detected by the second telecommunication terminal (5), **characterized in that** when the second telecommunication terminal (5) has used a second evaluation unit (20) to detect the presence of a user with access authorization as the required destination subscriber, it uses the second network connection unit (50) to send an appropriate notification to the telecommunication network (25) that automatic callback is possible, said notification being delivered at regular intervals of time from the second telecommunication terminal (5) to the telecommunication network (25) so long as an identification module (10) of the user with access authorization is detected by the second evaluation unit (20), wherein a first evaluation unit (35) in the first telecommunication terminal (1) checks whether the telecommunication network (25) has received a piece of information about a notification from the second telecommunication terminal (5) according to which a user of the second telecommunication terminal (5) who has access authorization is present on the second telecommunication terminal (5) and the reception of this piece of information is not longer ago than a prescribed time, automatic callback is initiated, the regular intervals of time beingchosen to be the same as the prescribed time.

2. Method according to Claim 1, **characterized in that** the presence of the required destination subscriber is established by detecting an input on an input unit, in particular a keypad, of the second telecommunication terminal (5).

3. Method according to Claim 1 or 2, **characterized in that** the identification module (10) is detected by means of a read device (15) assigned to the second telecommunication terminal (5).

4. Method according to one of Claims 1 to 3, **characterized in that** the identification module (10) is detected in a contactless manner, preferably via radio, by the second telecommunication terminal (5) in an environment of the second telecommunication terminal (5).

5. Method according to one of the preceding claims, **characterized in that** the automatic callback is initiated when it is established that at least the first telecommunication terminal (1) is not busy.

6. Method according to Claim 5, **characterized in that** the automatic callback is initiated when it is established that neither the first telecommunication terminal (1) nor the second telecommunication terminal (5) is busy.

7. Method according to one of the preceding claims, **characterized in that** the automatic callback from the first telecommunication terminal (1) to the second telecommunication terminal (5) is initiated by means of call diversion.

## Revendications

1. Procédé pour effectuer un rappel automatique à partir d'un premier terminal de télécommunication (1) vers un second terminal de télécommunication (5) après l'échec de l'établissement d'une liaison entre le premier terminal de télécommunication (1) et un abonné destinataire souhaité, dans lequel une première unité de raccordement au réseau (45) du premier terminal de télécommunication (1) est connectée à la seconde unité de raccordement au réseau (50) du second terminal de télécommunication (5) par l'intermédiaire d'un réseau de télécommunication (25) dans lequel on lance le rappel automatique au plus tôt lorsque le second terminal de télécommunication (5) détecte la présence de l'abonné destinataire souhaité, **caractérisé en ce que**, lorsque le second terminal de télécommunication (5) a détecté la présence d'un utilisateur à accès autorisé en tant qu'abonné destinataire souhaité au moyen d'une seconde unité d'évaluation (20), il envoie au réseau de télécommunication (25) par l'intermédiaire de la seconde unité de raccordement au réseau (50) un message correspondant, **en ce qu'**un rappel automatique est possible, dans lequel ce message est délivré à des intervalles de temps réguliers par le second terminal de télécommunication (5) au réseau de télécommunication (25) tant qu'un module d'identification (10) de l'utilisateur à accès autorisé est détecté par la seconde unité d'évaluation (20), dans lequel une première unité d'évaluation (35) du premier terminal de télécommunication (1) vérifie si une information concernant un message du second terminal de télécommunication (5) a été reçue par le réseau de télécommunication (25) selon lequel un utilisateur à accès autorisé du second terminal de télécommunication (5) est présent sur le second terminal de télécommunication (5) et la réception de cette information n'est pas retardée d'un temps supérieur à un temps prédéterminé, un rappel automatique est active, les intervalles de temps réguliers étant sélectionnés de manière à être égaux au temps predetermine.

2. Procédé selon la revendication 1, **caractérisé en ce qu'**on constate la présence de l'abonné destinataire souhaité par la détection d'une entrée par une unité d'entrée, notamment un clavier, du second terminal de télécommunication (5).

3. Procédé selon la revendication 1 ou 2, **caractérisé en ce qu'**on détecte le module d'identification (10) à l'aide d'un dispositif de lecture (15) associé au second terminal de télécommunication (5).

4. Procédé selon l'une des revendications 1-3, **caractérisé en ce qu'**on détecte le module d'identification (10) sans contact, de préférence par radio à partir du second terminal de télécommunication (5) dans un environnement du second terminal de télécommunication (5).

5. Procédé selon l'une des revendications précédentes, **caractérisé en ce qu'**on lance le rappel automatique si l'on constate qu'au moins le premier terminal de télécommunication (1) n'est pas occupé.

6. Procédé selon la revendication 5, **caractérisé en ce qu'**on lance le rappel automatique si l'on constate que ni le premier terminal de télécommunication (1) ni le second terminal de télécommunication (5) est encore occupé.

7. Procédé selon l'une des revendications précédentes, **caractérisé en ce qu'**on lance le rappel automatique par le premier terminal de télécommunication (1) vers le second terminal de télécommunication (5) par une déviation d'appel.
